# EUROPEAN PATENT APPLICATION

(11) **EP 2 369 656 A1**
(43) Date of publication of application: **28.09.2011**
(21) Application number: 09834614.1
(22) Date of filing: 26.10.2009
(51) Int. Cl.: H01M 2/10, B60L 11/18, H01M 10/48

(54) **BATTERY MODULE**

(30) Priority: 24.12.2008 JP 2008328023
(71) Applicant: Mitsubishi Heavy Industries, Ltd., Tokyo 108-8215 (JP)
(72) Inventor: YOSHIDA, Tadashi, Nagasaki-shi Nagasaki 851-0392 (JP); HASHIZAKI, Katsuo, Nagasaki-shi Nagasaki 850-8610 (JP); OHISHI, Masazumi, Nagasaki-shi Nagasaki 850-8610 (JP); NISHIDA, Takehiko, Nagasaki-shi Nagasaki 851-0392 (JP); KOBAYASHI, Katsuaki, Nagasaki-shi Nagasaki 851-0392 (JP)
(74) Representative: HOFFMANN EITLE
(86) International application number: PCT/JP2009/068323
(87) International publication number: WO 2010/073809

(57) **Abstract**

Safety is ensured even when installed in mobile objects such as electric vehicles, deep-sea explorers, and so on. A battery module (10) provided with a plurality of battery packs (13) and a unit battery container (14) that houses these battery packs (13), wherein the unit battery container (14) includes a top-half housing (18), which is a lid, and a bottom-half housing (19) where the battery packs (13) are mounted, and wherein through-holes are formed in the bottom-half housing (19) so as to penetrate in the plate-thickness direction thereof at positions that face center portions of lower surfaces of the individual battery packs (13); branch pipes (23) are individually connected to the individual through-holes; these branch pipes (23) are connected to a single main pipe (25) that is provided with a liquid-leakage detecting sensor (24) at one end thereof; and the liquid-leakage detecting sensor (24) is connected to a liquid-leakage detecting device (27) via a signal cable (26).

## Description

### {Technical Field}

The present invention relates to a battery module, and in particular, to a battery module that is suitable for installing in mobile objects such as electric vehicles, deep-sea explorers, and so on.

### {Background Art}

When lithium batteries, fuel cells, or the like are employed under various usage types, it is generally necessary to ensure reliability and safety of these batteries. In particular, when employing these batteries in, for example, mobile objects such as electric vehicles, deep-sea explorers, or the like, it is necessary to confirm that these batteries meet predetermined standards through tests, such as drop tests, vibration tests, impact tests, and so on.

In addition, if a short circuit occurs in electrodes in a charged battery, heat is generated inside the battery due to internal short-circuit currents, which causes high-temperature gas to be expelled and also cases damage to the battery; electrolyte in the battery may consequently leak therefrom, posing the risk of the electrolyte igniting.

A known battery module to be installed in an electric vehicle is disclosed in Patent Literature 1.

### {Citation List}

### {Patent Literature}

{PTL 1} Japanese Unexamined Patent Application, Publication No. 2007-242593.

### {Summary of Invention}

### {Technical Problem}

The above-described Patent Literature 1, however, does not disclose measures against impacts, vibrations, liquid leakage, fire, or the like, and what has become an issue in recent years is ensuring safety for situations in which battery modules are installed in mobile objects such as electric vehicles, deep-sea explorers, and so on.

The present invention has been conceived in the light of the above-described circumstances, and an object thereof is to provide a battery module that is capable of ensuring safety even when installed in a mobile object such as an electric vehicle, a deep-sea explorer, and so on.

### {Solution to Problem}

In order to solve the above-described problems, the present invention employs the following solutions.
A battery module according to a first aspect of the present invention is a battery module provided with a plurality of battery packs; and a unit battery container that houses these battery packs, wherein the unit battery container includes a top-half housing, which is a lid, and a bottom-half housing where the battery packs are mounted, and wherein through-holes are formed in the bottom-half housing so as to penetrate in the plate-thickness direction thereof at positions that face center portions of lower surfaces of the individual battery packs; branch pipes are individually connected to the individual through-holes; these branch pipes are connected to a single main pipe that is provided with a liquid-leakage detecting sensor at one end thereof; and the liquid-leakage detecting sensor is connected to a liquid-leakage detecting device via a signal cable.

With the above-described first aspect, the battery packs are housed in a sealed space formed in the unit battery container, and electrolyte that has leaked out of the single batteries, which constitute the battery packs, is guided to the main pipe via corresponding through-holes and the branch pipes formed in the bottom-half housing so as to subsequently be guided toward the liquid-leakage detecting sensor via the main pipe. Then, when the liquid-leakage detecting sensor detects the electrolyte, the liquid-leakage detecting device is activated so that the liquid leakage can be recognized and the electrolyte can be previously prevented from igniting.
By doing so, safety can be ensured even when installed in a mobile object such as an electric vehicle or the like.

With the above-described first aspect, it is even more preferable that the main pipe is a single straight pipe that is disposed in an inclined manner so that one end thereof provided with the liquid-leakage sensor is positioned below the other end thereof.

With the above-described first aspect, the main pipe is disposed in an inclined manner so that the electrolyte that has leaked out of the single batteries, which constitute the battery packs, is quickly (in a short amount of time) guided toward the liquid-leakage detecting sensor via the main pipe; therefore, even when the electrolyte that has leaked out of the single batteries is in a small amount, the liquid leakage can be rapidly and reliably detected, thereby making it possible to further enhance the safety when installed in a mobile object such as an electric vehicle or the like.

With the above-described first aspect, it is even more preferable that liquid-leakage detecting device is connected to an acoustic device, and that the liquid-leakage detecting device is activated upon detection of liquid-leakage by the liquid-leakage detecting sensor, so that the acoustic device issues an alarm sound.

With the above-described first aspect, because liquid leakage can be recognized (notified) audibly, the liquid leakage can be easily recognized even while driving, thereby making it possible to further enhance the safety when installed in a mobile object such as an electric vehicle or the like.

With the above-described first aspect, it is even more preferable to include a fire-extinguishing system that releases a fire-extinguishing agent into the interior of the unit battery container, if internal temperature of the unit battery container exceeds a predetermined value.

With the above-described first aspect, the fire-extinguishing agent filling the cylinder is forcefully released into the interior of the unit battery container, if, for example, the internal temperature of the unit battery container detected by the temperature sensor exceeds the predetermined value.
By doing so, even if the electrolyte that has leaked out of the single batteries, which constitute the battery packs, is ignited to cause a fire in the unit battery container, the fire can rapidly and reliably be extinguished, thereby making it possible to further enhance the safety when installed in a mobile object such as an electric vehicle or the like.

With the above-described first aspect, it is even more preferable to include a unit-battery-container installing base that houses the bottom-half housing in a close contact therewith; and a shock absorber that is attached to a side wall of this unit-battery-container installing base to absorb vibrations and impacts.

With the above-described configuration, vibrations and impacts are passively buffered (absorbed) by the shock absorbers, and thus, collisions among the battery packs or among the single batteries, which constitute the battery packs, can be prevented, and damage to the single batteries can be prevented; therefore, it is possible to further enhance the safety when installed in a mobile object such as an electric vehicle or the like.

With the above-described configuration, it is even more preferable to include an impact-alleviating system that actively controls the shock absorber on the basis of an impact force detected by an impact sensor mounted to the unit battery container.

With the above-described configuration, the shock absorbers are actively (actively) controlled on the basis of the impact force (acceleration) detected by the impact sensor, and vibrations and impacts are actively buffered (absorbed) by these shock absorbers.
By doing so, collisions among the battery packs or among the single batteries, which constitute the battery packs, can be further prevented, and damage to the single batteries can be further prevented; therefore the safety when installed in a mobile object such as an electric vehicle or the like can be further enhanced.

A battery module according to a second aspect of the present invention is a battery module provided with a plurality of battery packs; and a unit battery container that houses these battery packs, wherein the unit battery container includes a top-half housing, which is a lid, and a bottom-half housing where the battery packs are mounted, and an air-bag system that release gas into the interior of bags housed inside the air-bag accommodating boxes if an impact force detected by an impact sensor exceeds a predetermined value is disposed in the periphery of the unit battery container.

With the above-described second aspect, when the impact force (acceleration) detected by the impact sensor exceeds the predetermined value, for example, the gas filling the gas cylinders is forcefully released into the interior of the bags housed inside the air-bag accommodating boxes.
By doing so, impact forces that act on the battery module are buffered (absorbed) and, at the time of a collision, collisions among the battery packs or among the single batteries, which constitute the battery packs, can be prevented, and damage to the single batteries can be prevented; therefore, the safety when installed in a mobile object such as an electric vehicle or the like can be further enhanced.

With the battery module of the second aspect described above, it is even more preferable that holding screws that hold down upper surfaces of the individual battery packs be attached to the top-half housing.

With such a battery module, because the battery packs are held down by the holding screws to be secured in the unit battery container, collisions among the battery packs or among the single batteries, which constitute the battery packs, can be prevented, and damage to the single batteries can be prevented.

With the battery module described above, it is even more preferable that the bottom-half housing be provided with barriers that separate the battery packs from the adjacent battery packs.

With such a battery module, because predetermined gaps are ensured between the battery packs and the battery packs by barriers provided between the battery packs and the battery packs, collisions among the battery packs or among the single batteries, which constitute the battery packs, can be prevented, and damage to the single batteries can be prevented.

A third aspect of the present invention is a mobile object in which a high-safety battery module including measures against impacts, vibrations, liquid leakage, fire, or the like is installed.

With the above-described third aspect, even in the unlikely event of a collision accident, fire, or the like, the safety of passengers can be ensured.

### {Advantageous Effects of Invention}

With the present invention, an advantage is afforded in that safety can be ensured even when installed in mobile objects such as electric vehicles, deep-sea explorers, and so on.

### {Brief Description of Drawings}

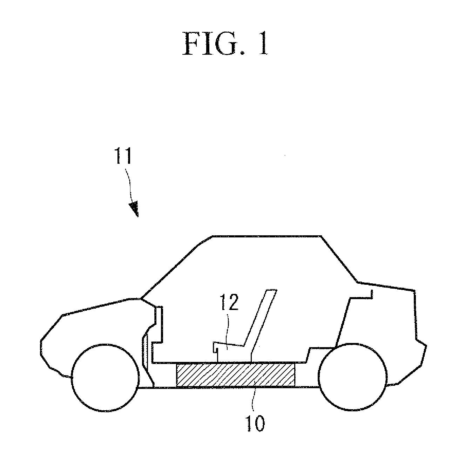

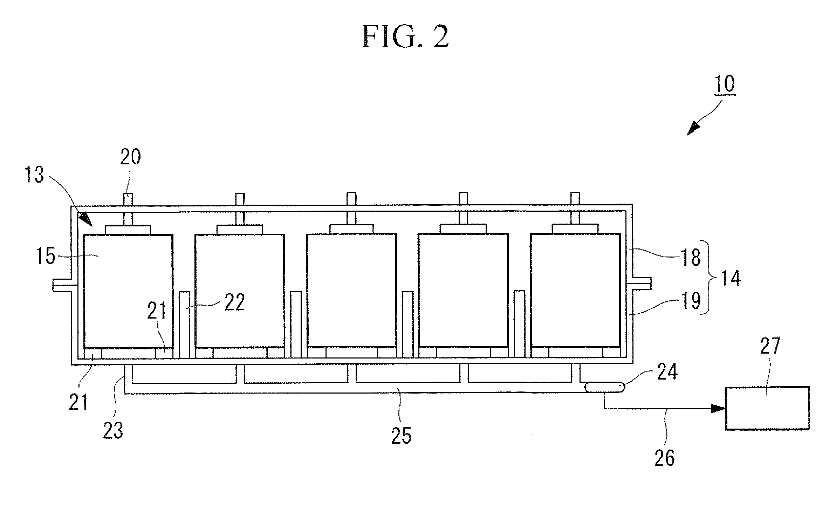

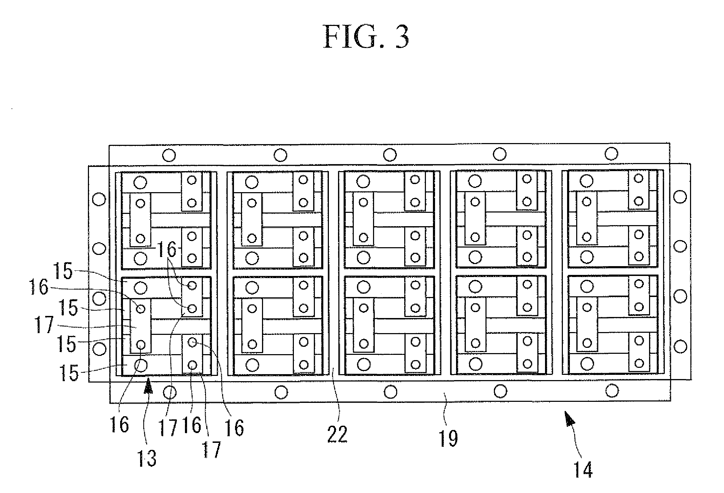

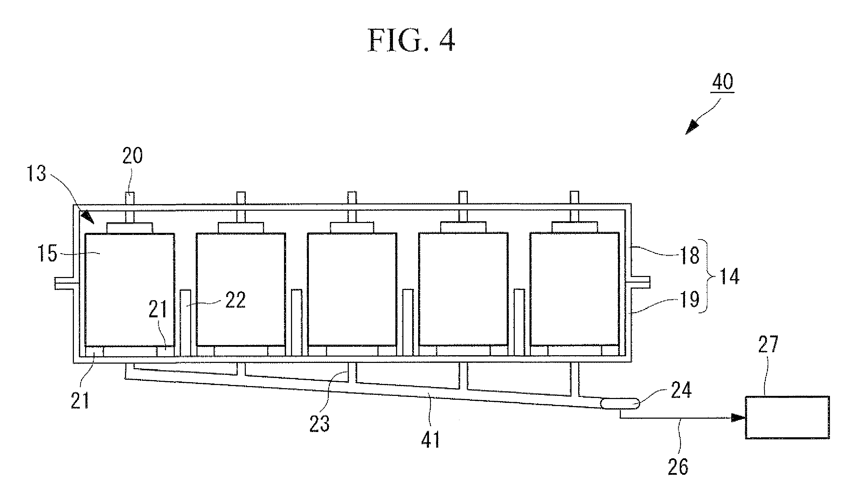

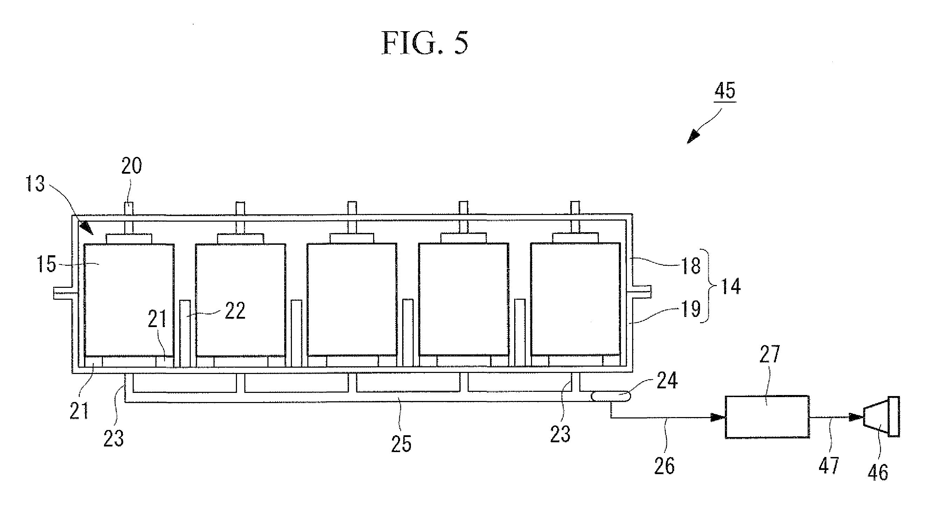

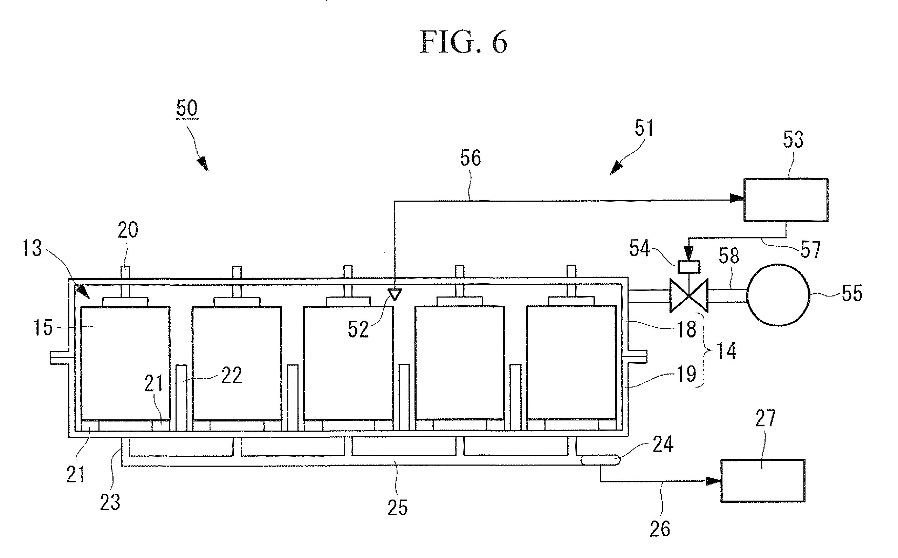

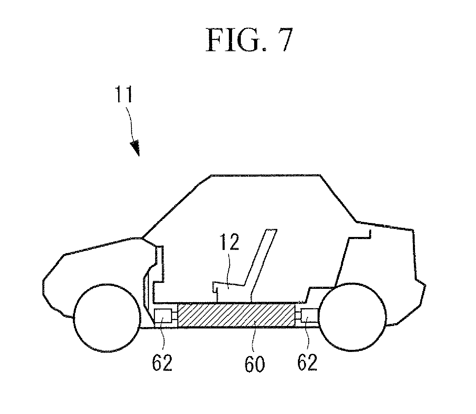

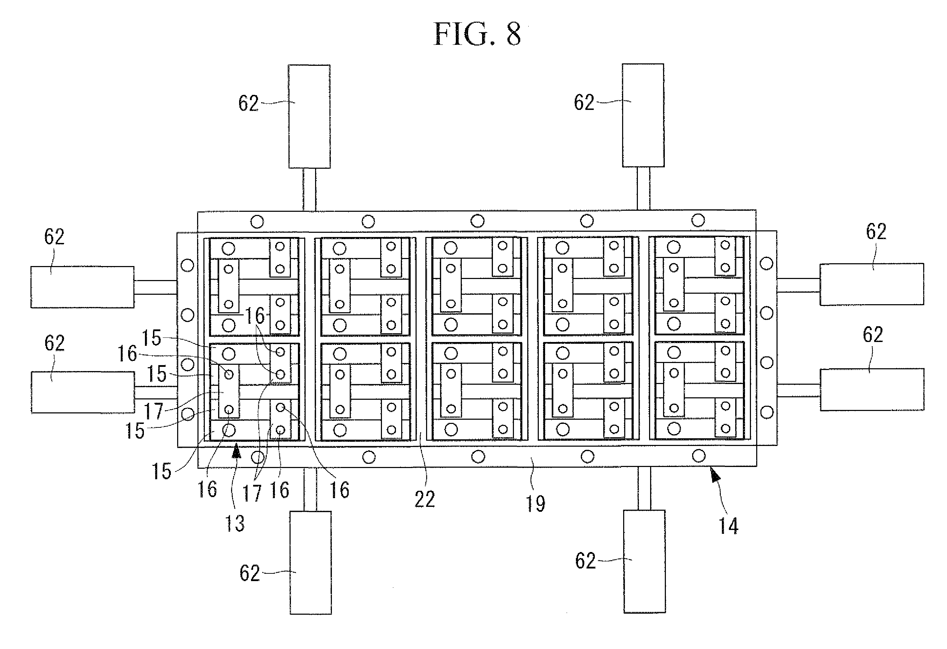

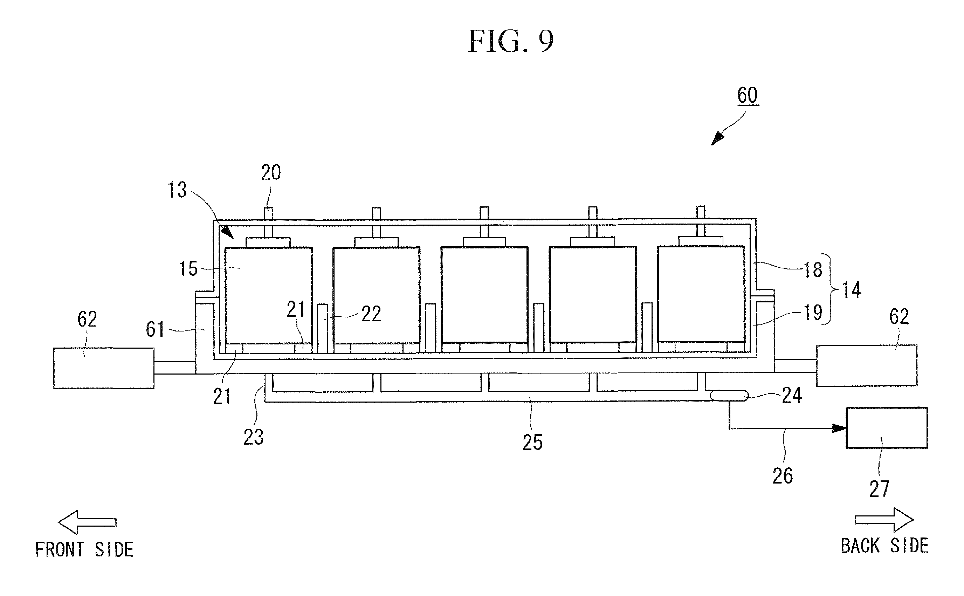

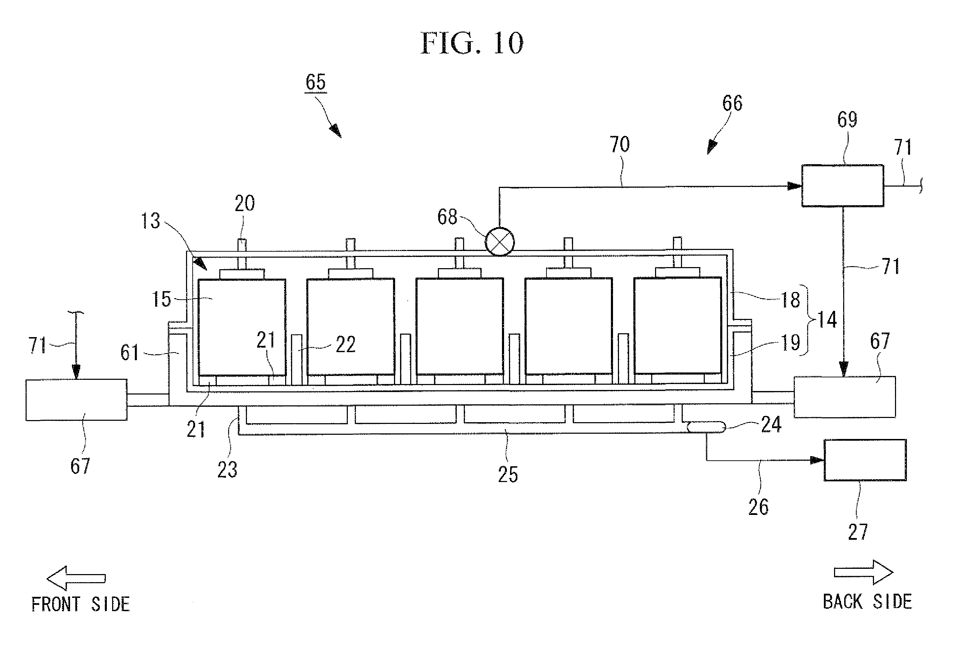

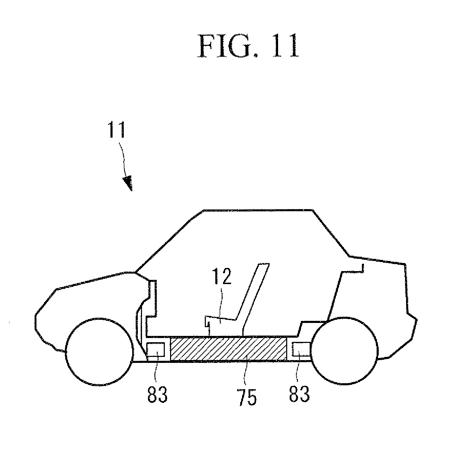

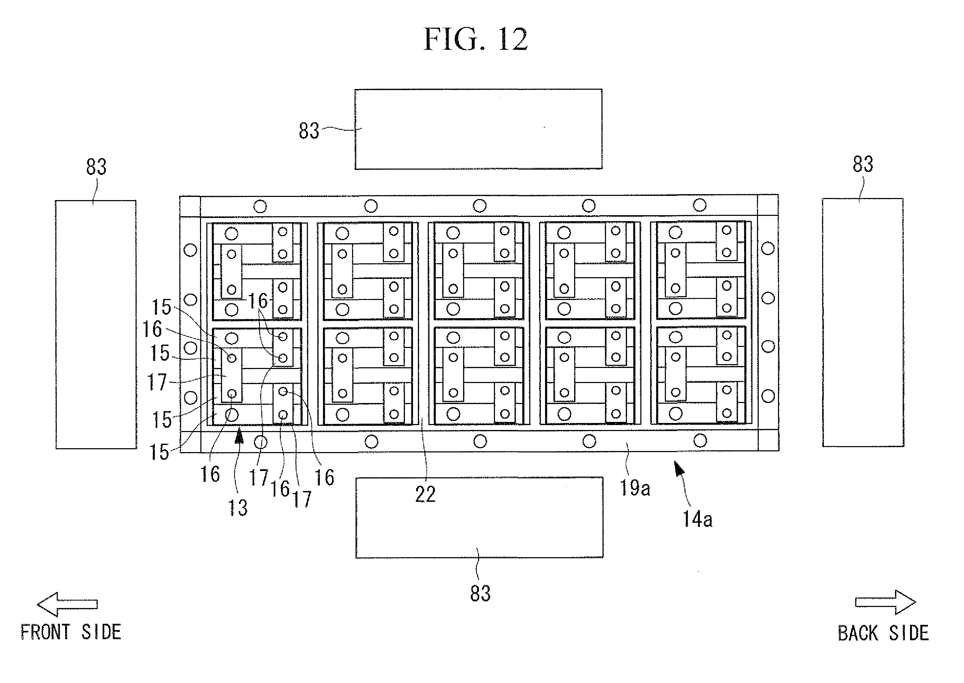

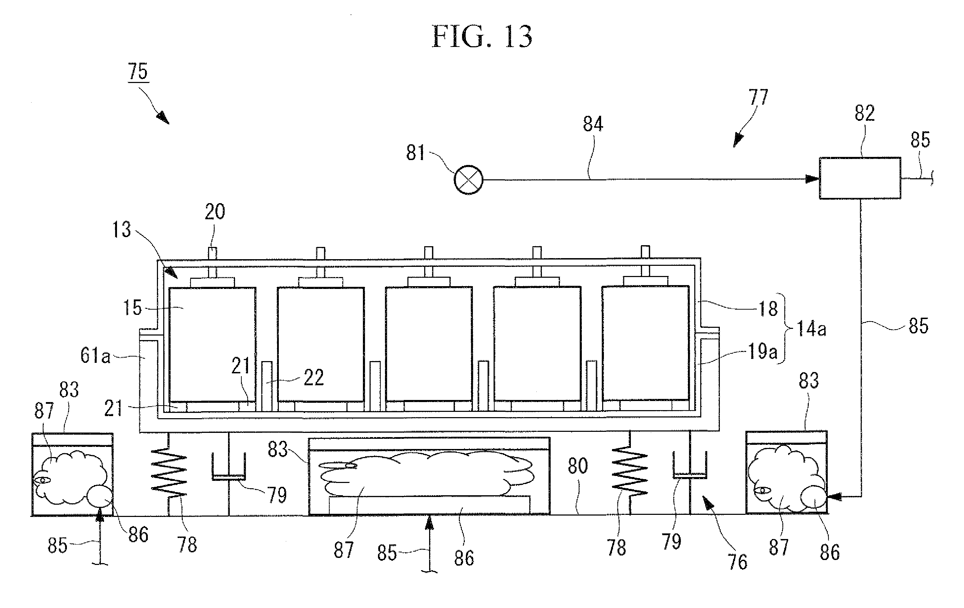

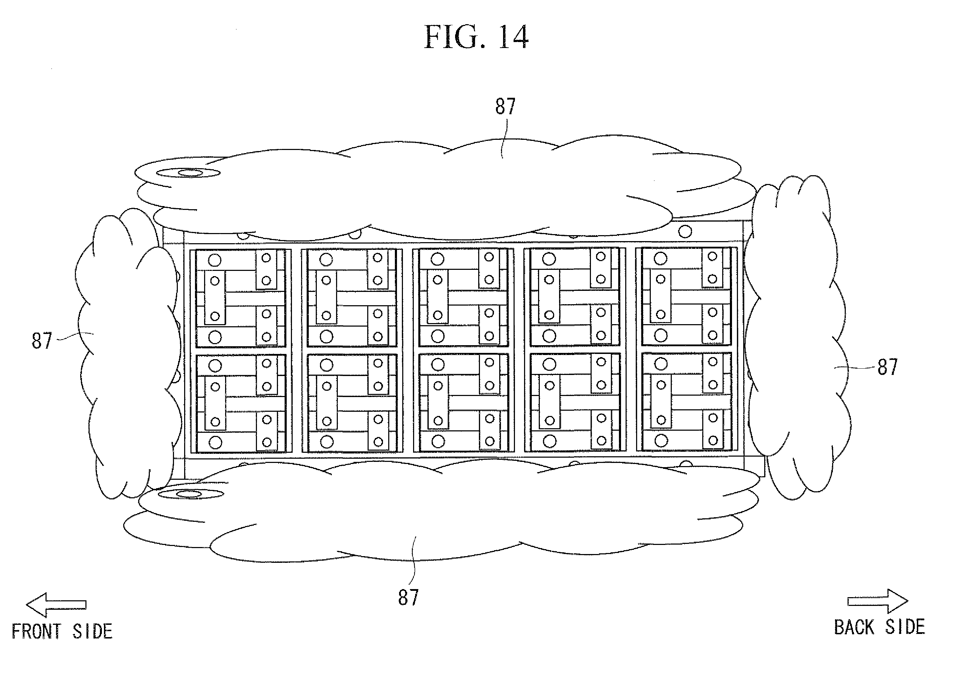

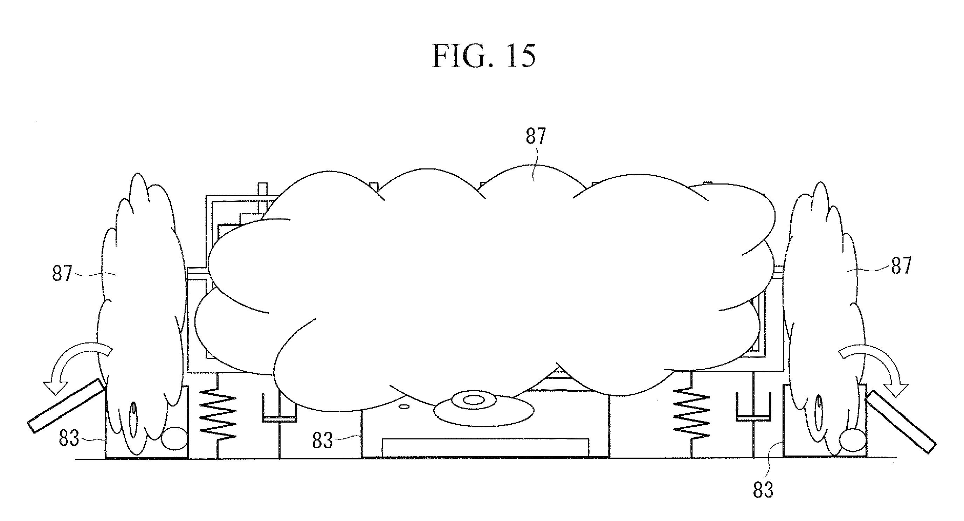

{Fig. 1} Fig. 1 is a diagram showing a state in which a battery module according to a first embodiment of the present invention is installed in an electric vehicle.
{Fig. 2} Fig. 2 is a longitudinal sectional view of the battery module according to the first embodiment of the present invention.
{Fig. 3} Fig. 3 is a diagram showing the battery module according to the first embodiment of the present invention, which is a plan view that shows a state in which a top housing is removed.
{Fig. 4} Fig. 4 is a longitudinal sectional view of a battery module according to a second embodiment of the present invention.
{Fig. 5} Fig. 5 is a longitudinal sectional view of a battery module according to a third embodiment of the present invention.
{Fig. 6} Fig. 6 is a longitudinal sectional view of a battery module according to a fourth embodiment of the present invention.
{Fig. 7} Fig. 7 is a diagram showing a state in which a battery module according to a fifth embodiment of the present invention is installed in an electric vehicle.
{Fig. 8} Fig. 8 is a diagram showing the battery module according to the fifth embodiment of the present invention, which is a plan view that shows a state in which a top housing is removed.
{Fig. 9} Fig. 9 is a longitudinal sectional view of the battery module according to the fifth embodiment of the present invention.
{Fig. 10} Fig. 10 is a longitudinal sectional view of a battery module according to a sixth embodiment of the present invention.
{Fig. 11) Fig. 11 is a diagram showing a state in which a battery module according to a seventh embodiment of the present invention is installed in an electric vehicle.
{Fig. 12} Fig. 12 is a diagram showing the battery module according to the seventh embodiment of the present invention, which is a plan view that shows a state in which a top housing is removed.
{Fig. 13} Fig. 13 is a longitudinal sectional view of the battery module according to the seventh embodiment of the present invention.
{Fig. 14} Fig. 14 is a diagram showing the battery module according to the seventh embodiment of the present invention, which is a plan view that shows a state in which an air-bag system is activated.
{Fig. 15} Fig. 15 is a diagram showing the battery module according to the seventh embodiment of the present invention, which is a longitudinal sectional view that shows the state in which the air-bag system is activated.

### {Description of Embodiments}

A first embodiment of a battery module according to the present invention will be described below with reference to Figs. 1 to 3.
Fig. 1 is a diagram showing a state in which a battery module according to this embodiment is installed in an electric vehicle, Fig. 2 is a longitudinal sectional view of the battery module according to this embodiment, and Fig. 3 is a diagram showing the battery module according to this embodiment, which is a plan view that shows a state in which a top housing is removed.
As shown in Fig. 1, a battery module 10 according to this embodiment is installed, for example, at a center portion of a body of an electric vehicle (mobile object) 11 below a seat 12.

As shown in Fig. 2 or 3, the battery module 10 is provided with a plurality of (ten in this embodiment) battery packs 13 that are used as a power source of the electric vehicle 11 (see Fig. 1) and a unit battery container (battery accommodating container) 14 that houses (accommodates) these battery packs 13.
The battery packs 13 are constituted of a plurality of (four in this embodiment) cube-shaped single batteries 15, such as lithium-ion secondary batteries or the like that can be discharged/charged, which are connected (combined) in series, and electrode terminals 16 of anodes and cathodes of adjacent single batteries 15 are electrically connected with bus bars (connecting bars) 17 formed of a conductive material.

The unit battery container 14 is provided with a top-half housing 18, which is a lid, and a bottom-half housing 19 where the battery packs 13 are mounted.
As shown in Fig. 2, threaded holes (not shown) are formed in the top-half housing 18 so as to penetrate in the plate-thickness direction thereof at positions that face center portions of upper surfaces (top surfaces) of the individual single batteries 15, and holding screws 20 are threaded (attached) through the individual threaded holes.

In the bottom-half housing 19 on the other hand, bottom-surface supporting bases 21 that support lower surfaces of the single batteries 15 are provided at positions that face peripheral edge portions (or corner portions) of the lower surfaces (bottom surfaces) of the individual single batteries 15, and barriers (partitioning walls) 22 that separate the battery packs 13 from the adjacent battery packs 13 in a longitudinal direction are provided between the battery packs 13 and the adjacent battery packs 13 in the longitudinal direction.
In addition, through-holes (not shown) are formed in the bottom-half housing 19 so as to penetrate in the plate-thickness direction thereof at positions that face center portions of the lower surfaces of the individual battery packs 13, and branch pipes 23 are individually connected to the individual through-holes. The branch pipes 23 are connected to a single main pipe 25 that is provided with a liquid-leakage detecting sensor (for example, optical liquid-leakage sensors) 24 at one end thereof and that extends straight in the horizontal direction, and the liquid-leakage detecting sensor 24 is connected to a liquid-leakage detecting device 27 via a signal cable 26.

With the battery module 10 according to this embodiment, the battery packs 13 are housed in a sealed space formed in the unit battery container 14, and electrolyte that has leaked out of the single batteries 15 is guided to the main pipe 25 via corresponding through-holes and the branch pipes 23 formed in the bottom-half housing 19 so as to subsequently be guided toward the liquid-leakage detecting sensor 24 via the main pipe 25. Then, when the liquid-leakage detecting sensor 24 detects the electrolyte, the liquid-leakage detecting device 27 is activated so that the liquid leakage can be recognized and the electrolyte can be previously prevented from igniting.

Furthermore, the battery packs 13 are held down by the holding screws 20 to be secured in the unit battery container 14 and, in addition, the barriers 22 are provided between the battery packs 13 and the battery packs 13 to ensure predetermined gaps between the battery packs 13 and the battery packs 13, so that collisions among the battery packs 13 or among the single batteries 15 can be prevented, and so that damage to the single batteries 15 can be prevented.

Accordingly, safety can be ensured even when installed in a mobile object such as the electric vehicle 11 or the like.

A second embodiment of the battery module according to the present invention will be described with reference to Fig. 4. Fig. 4 is a longitudinal sectional view of a battery module according to this embodiment.
As shown in Fig. 4, a battery module 40 according to this embodiment differs from the one in the first embodiment described above in that a main pipe 41 is provided instead of the main pipe 25. Because other components are the same as those in the first embodiment described above, descriptions of those components are omitted wherein.

The main pipe 41 is a single straight pipe disposed in an inclined manner so that one end thereof, provided with the liquid-leakage detecting sensor 24, is positioned below the other end thereof, and liquid guided into the main pipe 41 via the branch pipes 23 naturally flows toward the liquid-leakage detecting sensor 24.

With the battery module 40 according to this embodiment, the main pipe 41 is disposed in an inclined manner so that the electrolyte that has leaked out of the single batteries 15 is quickly (in a short amount of time) guided toward the liquid-leakage detecting sensor 24 via the main pipe 41; therefore, even when the electrolyte that has leaked out of the single batteries 15 is in a small amount, the liquid leakage can be rapidly and reliably detected, thereby making it possible to further enhance the safety when installed in a mobile object such as the electric vehicle 11 or the like.

A third embodiment of the battery module according to the present invention will be described with reference to Fig. 5. Fig. 5 is a longitudinal sectional view of a battery module according to this embodiment.
As shown in Fig. 5, a battery module 45 according to this embodiment differs from the one in the first embodiment described above in that a speaker (acoustic device: alarm-issuing device) 46 is provided. Because other components are the same as those in the first embodiment described above, descriptions of those components are omitted herein.

The speaker 46 is connected to the liquid-leakage detecting device 27 via the signal cable 47, and the liquid-leakage detecting device 27 is activated upon detection of liquid leakage by the liquid-leakage detecting sensor 24 to issue an alarm sound with the speaker 46 so that a passenger or the like of the electric vehicle 11 (see Fig. 1) is notified of the liquid leakage.

With the battery module 45 according to this embodiment, because liquid leakage can be recognized (notified) audibly, the liquid leakage can be easily recognized even while driving, thereby making it possible to further enhance the safety when installed in a mobile object such as the electric vehicle 11 or the like.

A fourth embodiment of the battery module according to the present invention will be described with reference to Fig. 6. Fig. 6 is a longitudinal sectional view of a battery module according to this embodiment.
As shown in Fig. 6, a battery module 50 according to this embodiment differs from the one in the first embodiment described above in that a fire-extinguishing system (fire-extinguishing device) 51 is provided. Because other components are the same as those in the first embodiment described above, descriptions of those components are omitted herein.

The fire-extinguishing system 51 is provided with a temperature sensor 52, a controller (control device) 53, a control valve 54, and a cylinder 55.
The temperature sensor 52 is installed at an inner ceiling surface of the top-half housing 18 to detect the internal temperature of the unit battery container 14 and is connected to the controller 53 via a signal cable 56. Temperature data detected by the temperature sensor 52 are constantly (successively) output to the controller 53 via the signal cable 56.
If the internal temperature of the unit battery container 14 detected by the temperature sensor 52 exceeds a predetermined value (for example, 100 °C), the controller 53 outputs a control signal (command signal) to the control valve 54, which is connected to the controller 53 via a signal cable 57.

The control valve 54 is an automatic open/close valve connected at a halfway position of a pipe 58, which communicates with the interior of the unit battery container 14 being connected at one end thereof to a through-hole (not shown) that penetrates, in the plate-thickness direction thereof, a side wall of the top-half housing 18 at a top portion thereof and communicates with the interior of the cylinder 55 being connected at the other end thereof to the cylinder 55. In addition, upon sensing a control signal sent from the controller 53, the control valve 54 rotates (or moves) a valve piece (not shown) disposed inside thereof from a fully closed position to a fully open position.

The interior of the cylinder 55 is filled with a fire-extinguishing agent (powder fire-extinguishing agent, carbon dioxide, etc.), and the fire-extinguishing agent in the cylinder 55 is forcefully released into the interior of the unit battery container 14 by opening the control valve 54.

With the battery module 50 according to this embodiment, the fire-extinguishing agent filling the cylinder 55 is forcefully released into the interior of the unit battery container 14 if the internal temperature of the unit battery container 14 detected by the temperature sensor 52 exceeds the predetermined value (for example, 100 °C).
By doing so, even if the electrolyte that has leaked out of the single batteries 15 is ignited to cause a fire in the unit battery container 14, the fire can rapidly and reliably be extinguished, thereby making it possible to further enhance the safety when installed in a mobile object such as the electric vehicle 11 or the like.

A fifth embodiment of the battery module according to the present invention will be described with reference to Figs. 7 to 9.
Fig. 7 is a diagram showing a state in which a battery module according to this embodiment is installed in an electric vehicle; Fig. 8 is a diagram showing the battery module according to this embodiment, which is a plan view that shows a state in which a top housing is removed; and Fig. 9 is a longitudinal sectional view of the battery module according to this embodiment.
As shown in Figs. 7 to 9, a battery module 60 according to this embodiment differs from the one in the first embodiment described above in that a unit-battery-container installing base 61 and shock absorbers 62 are provided. Because other components are the same as those in the first embodiment described above, descriptions of those components are omitted herein.

As shown in Fig. 9, the unit-battery-container installing base 61 houses the bottom-half housing 19 of the unit battery container 14 in close contact therewith, and two shock absorbers 62 are connected (coupled) to each of the front, back, left, and right side walls thereof. In addition, through-holes are formed in the unit-battery-container installing base 61 so as to penetrate in the plate-thickness direction thereof at positions that face the through-holes formed in the bottom-half housing 19.

The shock absorbers 62 are devices that buffer vibrations and impacts with springs, etc. to suppress movement of the unit-battery-container installing base 61 and the unit battery container 14 relative to the electric vehicle 11, are connected to the side walls of the unit-battery-container installing base 61 at one end thereof, and are connected (coupled) to a frame (not shown), etc. of the electric vehicle 11 at the other end thereof.

With the battery module 60 according to this embodiment, vibrations and impacts are passively buffered (absorbed) by the shock absorbers 62, and thus, collisions among the battery packs 13 or among the single batteries 15 can be prevented, and damage to in the single batteries 15 can be prevented; therefore, it is possible to further enhance the safety when installed in a mobile object such as the electric vehicle 11 or the like.

A sixth embodiment of the battery module according to the present invention will be described with reference to Fig. 10. Fig. 10 is a longitudinal sectional view of a battery module according to this embodiment.
As shown in Fig. 10, a battery module 65 according to this embodiment differs from the one in the fifth embodiment described above in that an impact-alleviating system (impact-alleviating device) 66 and shock absorbers 67 are provided instead of the shock absorbers 62. Because other components are the same as those in the fifth embodiment described above, descriptions of those components are omitted herein.

The impact-alleviating system 66 is provided with an impact sensor (acceleration sensor) 68 and a controller (control device) 69.
The impact sensor 68 is installed at an outer ceiling surface of the top-half housing 18 to detect an impact or acceleration experienced by the unit-battery-container installing base 61 and the unit battery container 14 and is connected to the controller 69 via a signal cable 70. Impact data (acceleration data) detected by the impact sensor 68 are constantly (successively) output to the controller 69 via the signal cable 70.
The controller 69 outputs control signals (command signals) to the shock absorbers 67 connected thereto via signal cables 71 on the basis of an impact force (acceleration) detected by the impact sensor 68 to actively control the shock absorbers 67.

The shock absorbers 67 are actively controlled (controlled in directions that alleviate impacts or directions that reduce acceleration experienced by the unit-battery-container installing base 61 and the unit battery container 14) on the basis of the control signals sent from the controller 69, and, similarly to the shock absorbers 62 described above, two of them are disposed between the frame (not shown), etc. of the electric vehicle 11 and each of the front, back, left, and right side walls of the unit-battery-container installing base 61.

With the battery module 65 according to this embodiment, the shock absorbers 67 are actively (actively) controlled on the basis of the impact force (acceleration) detected by the impact sensor 68, and vibrations and impacts are actively buffered (absorbed) by these shock absorbers 67.
By doing so, collisions among the battery packs 13 or among the single batteries 15 can be further prevented, and damage to the single batteries 15 can be further prevented; therefore the safety when installed in a mobile object such as the electric vehicle 11 or the like can be further enhanced.

A seventh embodiment of the battery module according to the present invention will be described with reference to Figs. 11 to 15.
Fig. 11 is a diagram showing a state in which a battery module according to this embodiment is installed in an electric vehicle; Fig. 12 is a diagram showing the battery module according to this embodiment, which is a plan view that shows a state in which a top housing is removed; Fig. 13 is a longitudinal sectional view of the battery module according to this embodiment; Fig. 14 is a diagram showing the battery module according to this embodiment, which is a plan view that shows a state in which an air-bag system is activated; and Fig. 15 is a diagram showing the battery module according to this embodiment, which is a longitudinal sectional view that shows the state in which the air-bag system is activated.

As shown in Fig. 13, a battery module 75 according to this embodiment differs from the one in the first embodiment described above in that a unit battery container 14a, unit-battery-container installing base 61a, suspension members 76, and an air-bag system (air-bag device) 77 are provided instead of the unit battery container 14. Because other components are the same as those in the first embodiment described above, descriptions of those components are omitted herein.

The unit battery container 14a is provided with the top-half housing 18, which is a lid, and the bottom-half housing 19a where the battery packs 13 are mounted.
The threaded holes (not shown) are formed in the top-half housing 18 so as to penetrate in the plate-thickness direction thereof at positions that face the center portions of the upper surfaces (top surfaces) of the individual single batteries 15, and the holding screws 20 are threaded (attached) through the individual threaded holes.

In the bottom-half housing 19a on the other hand, the bottom-surface supporting bases 21 that support the lower surfaces (bottom surfaces) of the single batteries 15 are provided at positions that face the peripheral edge portions (or corner portions) of the lower surfaces of the individual single batteries 15, and barriers (partitioning walls) 22 that separate the battery packs 13 from the adjacent battery packs 13 in the longitudinal direction are provided between the battery packs 13 and the adjacent battery packs 13 in the longitudinal direction.
Note that, in this embodiment, the through-holes described in the first embodiment are not formed in the bottom-half housing 19a, and the bottom-half housing 19a is not provided with the branch pipes 23, the liquid-leakage detecting sensor 24, the main pipe 25, the signal cable 26, and the liquid-leakage detecting device 27 described in the first embodiment.

The unit-battery-container installing base 61a houses the bottom-half housing 19a of the unit battery container 14a in close contact therewith.
Note that, in this embodiment, the through-holes described in the fifth embodiment are not formed in the unit-battery-container installing base 61a.

The suspension members 76 are devices that buffer vibrations and impacts with a plurality of springs 78 and a plurality of dampers 79 to suppress movements of the unit-battery-container installing base 61a and the unit battery container 14a relative to the electric vehicle 11, and the springs 78 and the dampers 79 are connected at top end thereof to an outer bottom surface of the unit-battery-container installing base 61a and are connected (coupled) at bottom end thereof to a frame 80, etc. of the electric vehicle 11.

The air-bag system 77 is provided with an impact sensor (acceleration sensor) 81, a controller (control device) 82, and a plurality of (four in this embodiment) air-bag accommodating boxes 83.
The impact sensor 81 is installed at the frame (not shown), etc. of the electric vehicle 11 to detect impact or acceleration experienced by the electric vehicle 11 (that is, the unit-battery-container installing base 61a and the unit battery container 14a) and is connected to the controller 82 via a signal cable 84. Impact data (acceleration data) detected by the impact sensor 81 are constantly (successively) output to the controller 82 via the signal cable 84.
The controller 82 outputs control signals (command signals) to gas cylinders 86 housed inside the individual air-bag accommodating boxes 83, which are connected to the controller 82 via signal cables 85, if an impact force (acceleration) detected by the impact sensor 81 exceeds a predetermined value (for example, 30G).

The interior of the gas cylinders 86 is filled with compressed gas (nitrogen gas, etc.) and, when the control signals are input to the gas cylinders 86, the gas in the gas cylinders 86 is forcefully released into the interior of bags 87 housed inside the air-bag accommodating boxes 83 to instantly inflate the bags 87, as shown in Figs. 14 and 15.

With the battery module 75 according to this embodiment, the gas filling the gas cylinders 86 is forcefully released into the bags 87 housed inside the air-bag accommodating boxes 83, if the impact force (acceleration) detected by the impact sensor 81 exceeds the predetermined value (for example, 30G).
By doing so, impact forces between the battery module 75 and the body of the electric vehicle 11 are buffered (absorbed) and, at the time of a collision, collisions among the battery packs 13 or among the single batteries 15 can be prevented, and damage to the single batteries 15 can be prevented; therefore, the safety when installed in a mobile object such as the electric vehicle 11 or the like can be further enhanced.

Note that the present invention is not limited to the embodiments described above, and the above-described embodiments may be combined and the individual embodiments may be altered or modified within a range that does not depart from the sprit of the present invention.

### {Reference Signs List}

- 10: battery module
- 11: electric vehicle (mobile object)
- 13: assembled battery
- 14: unit battery container
- 14a: unit battery container
- 18: top-half housing
- 19: bottom-half housing
- 19a: bottom-half housing
- 20: holding screw
- 22: barrier
- 23: branch pipe
- 24: liquid-leakage detecting sensor
- 25: main pipe
- 26: signal cable
- 27: liquid-leakage detector
- 40: battery module
- 41: main pipe
- 45: battery module
- 46: speaker (acoustic device)
- 50: battery module
- 51: fire-extinguishing system
- 60: battery module
- 61: unit-battery-container installing base
- 61a: unit-battery-container installing base
- 62: shock absorber
- 65: battery module
- 66: impact-alleviating system
- 67: shock absorber
- 68: impact sensor
- 75: battery module
- 77: air-bag system
- 81: impact sensor
- 83: air-bag accommodating box
- 87: bag

## Claims

1. A battery module comprising:
a plurality of battery packs; and
a unit battery container that houses the battery packs,
wherein the unit battery container includes a top-half housing, which is a lid, and a bottom-half housing where the battery packs are mounted, and
wherein through-holes are formed in the bottom-half housing so as to penetrate in the plate-thickness direction thereof at positions that face center portions of lower surfaces of the individual battery packs; branch pipes are individually connected to the individual through-holes; these branch pipes are connected to a single main pipe that is provided with a liquid-leakage detecting sensor at one end thereof; and the liquid-leakage detecting sensor is connected to a liquid-leakage detecting device via a signal cable.

2. A battery module according to Claim 1, wherein the main pipe is a single straight pipe that is disposed in an inclined manner so that one end thereof provided with the liquid-leakage sensor is positioned below the other end thereof.

3. A battery module according to Claim 1 or 2, wherein the liquid-leakage detecting device is connected to an acoustic device, and the liquid-leakage detecting device is activated upon detection of liquid-leakage by the liquid-leakage detecting sensor, so that the acoustic device issues an alarm sound.

4. A battery module according to any one of Claims 1 to 3 further comprising a fire-extinguishing system that releases a fire-extinguishing agent into the interior of the unit battery container, if internal temperature of the unit battery container exceeds a predetermined value.

5. A battery module according to any one of Claims 1 to 4, further comprising:
a unit-battery-container installing base that houses the bottom-half housing in a close contact therewith; and
a shock absorber that is attached to a side wall of this unit-battery-container installing base to absorb vibrations and impacts.

6. A battery module according to Claim 5 further comprising an impact-alleviating system that actively controls the shock absorber on the basis of an impact force detected by an impact sensor mounted to the unit battery container.

7. A battery module comprising:
a plurality of battery packs; and
a unit battery container that houses these battery packs,
wherein the unit battery container includes a top-half housing, which is a lid, and a bottom-half housing where the battery packs are mounted, and
an air-bag system that release gas into the interior of bags housed inside the air-bag accommodating boxes if an impact force detected by an impact sensor exceeds a predetermined value is disposed in the periphery of the unit battery container.

8. A battery module according to any one of Claims 1 to 7,
wherein holding screws that hold down upper surfaces of the individual battery packs are attached to the top-half housing.

9. A battery module according to any one of Claims 1 to 8,
wherein the bottom-half housing is provided with barriers that separate the battery packs from the adjacent battery packs.

10. A mobile object equipped with a battery module according to any one of Claims 1 to 9.
